Europäisches Patentamt

European Patent Office

Office européen des brevets

(11) Veröffentlichungsnummer: **0 298 224 B1**

(12) **EUROPÄISCHE PATENTSCHRIFT**

(45) Veröffentlichungstag der Patentschrift: **30.06.93**

(21) Anmeldenummer: **88107655.8**

(22) Anmeldetag: **13.05.88**

(51) Int. Cl.⁵: **H04L 7/02**

(54) Signalübertragungsverfahren und Synchronisationsschaltung zur Verwendung in einem Empfänger zur Durchführung dieses Verfahren.

(30) Priorität: **09.07.87 CH 2613/87**

(43) Veröffentlichungstag der Anmeldung:
**11.01.89 Patentblatt 89/02**

(45) Bekanntmachung des Hinweises auf die
Patenterteilung:
**30.06.93 Patentblatt 93/26**

(84) Benannte Vertragsstaaten:
**AT BE CH DE FR GB LI NL SE**

(56) Entgegenhaltungen:
**FR-A- 2 493 646**

(73) Patentinhaber: **Ascom Radiocom AG**
**Ziegelmattstrasse 1**
**CH-4503 Solothurn(CH)**

(72) Erfinder: **Braun, Walter, Dr.**
**Winzerstrasse 40**
**CH-5430 Wettingen(CH)**
Erfinder: **Habermann, Joachim, Dr.**
**Jurastrasse 15b**
**CH-5406 Baden(CH)**

(74) Vertreter: **Roshardt, Werner Alfred et al**
**Dr. R. Keller + Partner Patentanwälte Markt-**
**gasse 31 Postfach**
**CH-3000 Bern 7 (CH)**

EP 0 298 224 B1

## Beschreibung

Die Erfindung betrifft ein Signalübertragungsverfahren, bei welchem in einem Sender eine Folge von gleichverteilten, statistisch unkorrelierten Symbolen, welche eine Symboldauer $T_S$ besitzen, mit einem gegebenen CPM-Verfahren in ein Frequenzbasisbandsignal umgewandelt werden, das Frequenzbasisbandsignal mittels einer Trägerschwingung zu einem Empfänger übertragen wird, der Empfänger bezüglich des Frequenzbasisbandsignals auf die Weise synchronisiert wird, dass in einer Anzahl N von Zeitfenstern, deren Anfangszeitpunkte bezogen auf einen Referenzzeitpunkt $t_R$ um ein ganzzahliges Vielfaches der Symboldauer $T_S$ verschoben sind und deren Länge jeweils der Symboldauer $T_S$ entspricht, das Frequenzbasisbandsignal in einer Anzahl K von Subintervallen pro Zeitfenster abgetastet wird, für abgetastete Werte aus einander entsprechenden Subintervallen Streuungen berechnet werden und aus der zeitlichen Lage der kleinsten der Streuungen ein Abtastzeitpunkt $T_A$ abgeleitet wird.

## STAND DER TECHNIK

Für die Uebertragung digitaler Daten sind CPM-Verfahren (CPM = Continuous Phase Modulation) besonders geeignet. Sie erlauben grundsätzlich eine kleine Störanfälligkeit bei einer geringer Bandbreite zu realisieren. Dieser Vorteil tritt vor allem dann zu Tage, wenn im Sender ein Frequenzpuls verwendet wird, der sich über mehrere Symbole erstreckt.

Ein wichtiger Schritt bei einem solchen Signalübertragungsverfahren stellt die präzise Synchronisation des Signalempfängers bezüglich des Frequenzbasisbandsignals dar. Es geht dabei darum, eine periodische Abtastung des Frequenzbasisbandsignals zu einem richtigen Zeitpunkt, dem sogenannten Abtastzeitpunkt, vorzunehmen.

Das europäische Patent EP 230 559 schlägt zu diesem Zweck ein Verfahren vor, bei welchem eine Anzahl von Zeitfenstern einer gegebenen Länge in Subintervalle aufgeteilt werden, das Frequenzbasisband in jedem Subintervall abgetastet wird, aus den zu entsprechenden Subintervallen gehörenden Werten Streuungen berechnet werden und aus der Lage der kleinsten der Streuungen der Abtastzeitpunkt ermittelt wird.

Der Nachteil dieses Verfahrens liegt darin, dass gerade bei Frequenzpulsen, die sich über mehrere Symbole erstrecken und deshalb zu einem spektral effizienten Signalübertragungsverfahren führen, die Störanfälligkeit der Synchronisation zunimmt.

## DARSTELLUNG DER ERFINDUNG

Aufgabe der vorliegenden Erfindung ist es daher, ein Verfahren der eingangs genannten Art so weiterzubilden, dass die Synchronisation des Signalempfängers auch bei Signalübertragungsverfahren, deren Frequenzpuls sich über mehrere Symbole erstreckt, exakt, schnell und mit geringer Störanfälligkeit möglich ist.

Die erfindungsgemässe Lösung der Aufgabe geht aus dem Kennzeichen des Hauptanspruchs hervor. Aus den Unteransprüchen ergeben sich bevorzugte Ausführungsformen der Erfindung.

Die Erfindung gründet auf die Erkenntnis, dass ein Phasendiagramm, welches durch Abtasten des Frequenzbasisbandsignals zu bestimmten, periodischen Zeitpunkten erhalten wird, in zwei einfache, charakteristische Phasendiagramme zerfällt, wenn die zugrundegelegten Abtastzeitpunkte in geeigneter Weise in zwei getrennten Gruppen zusammengefasst werden. Und zwar werden in der einen Gruppe alle Abtastzeitpunkte zusammengefasst, die bezogen auf einen gegebenen Referenzzeitpunkt $t_R$ um ein Vielfaches der doppelten Periode der Abtastung verschoben sind und in der anderen Gruppe alle übrigen Abtastzeitpunkte.

Aus dieser grundlegenden Erkenntnis ergeben sich auch neue Anforderungen an die Form des Frequenzpulses im Sender. Diese wird nun so festgelegt, dass das Signalübertragungsverfahren ausser den bisher bekannten Eigenschaften, wie z.B. einer geringen Ausserbandleistung, zusätzlich eine kleine Störanfälligkeit der Synchronisation des Signalempfängers aufweist.

## KURZE BESCHREIBUNG DER ZEICHNUNGEN

Nachfolgend soll die Erfindung im Zusammenhang mit der Zeichnung näher beschrieben werden. Es zeigen:

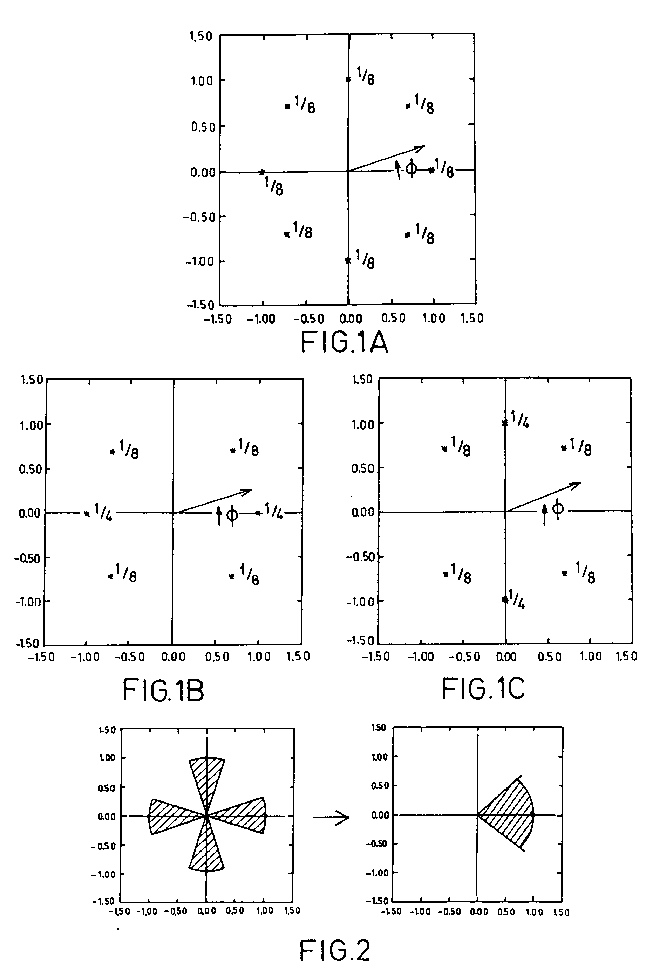

Fig. 1a      ein zeitinvariantes Phasendiagramm eines gegebenen Signalübertragungsverfahrens,
Fig. 1b      ein gerades Phasendiagramm dieses Signalübertragungsverfahrens,
Fig. 1c      ein ungerades Phasendiagramm dieses Signalübertragungsverfahrens,

2

| Fig. 2 | eine schematische Darstellung der Wirkung eines vorverarbeitenden Abbildungsverfahrens, |
| Fig. 3 | eine Darstellung der Abhängigkeit der Streuung der Phase des Frequenzbasisbandsignals vom Abtastzeitpunkt, |
| Fig. 4 | eine schematische Uebersicht über ein erfindungsgemässes Synchronisationsverfahren, |
| Fig. 5 | ein Blockschaltbild einer Synchronisationsschaltung eines Signalempfängers, |
| Fig. 6 | eine Darstellung eines bekannten, viel verwendeten Frequenzpulses, |
| Fig. 7 | eine Darstellung eines optimalen, erfindungsgemässen Frequenzpulses, |
| Fig. 8 | eine Darstellung der Ausserbandleistung eines Signalübertragungsverfahrens mit einem bekannten, respektive einem erfindungsgemässen Frequenzpuls, und |
| Fig. 9 | ein gerades Phasendiagramm eines Signalübertragungsverfahrens mit einem optimalen Frequenzpuls gemäss Fig. 7. |

## WEGE ZUR AUSFÜHRUNG DER ERFINDUNG

Die Erfindung lässt sich auf die verschiedensten Arten verwirklichen. Deshalb soll zuerst das ihr zugrundeliegende Prinzip erläutert werden.

Ein mittels eines CPM-Verfahrens erzeugtes Frequenzbasisbandsignal hat u.a. die Eigenschaft, dass es zu bestimmten, mit einem gegebenen zeitlichen Abstand $T_S$ periodischen Zeitpunkten $T_K$ nur einen Wert aus einer kleinen Menge von möglichen, gegebenen, diskreten Werten annehmen kann. Die möglichen, diskreten Werte können mit einer entsprechenden Phase in Verbindung gebracht werden, welche in einem Phasendiagramm als Phasenpunkt dargestellt werden kann. Setzt man voraus, dass das Frequenzbasisband aus einer Folge von gleichhäufig auftretenden, statistisch unkorrelierten Symbolen entstanden ist, so lässt sich zusätzlich für jeden Phasenpunkt eine für das Cpm-Verfahren charakteristische Auftrittshäufigkeit bestimmen.

Fig. 1A zeigt beispielhaft ein sogenannt zeitinvariantes Phasendiagramm. (Generell erhält man ein Phasendiagramm, indem man die Werte die das Frequenzbasisbandsignal in der komplexen Darstellung zu bestimmten Zeitpunkten annimmt, in der komplexen Ebene darstellt.) In diesem speziellen Fall haben die 8 möglichen Phasenpunkte alle dieselbe Auftrittshäufigkeit, nämlich 1/8, und einen konstanten Abstand voneinander.

Wird nun ein neues Phasendiagramm erstellt, wobei jedoch nur noch diejenigen Phasenwerte eingezeichnet werden, welche in bezug auf einen gegebenen Referenzzeitpunkt $t_R$ zu einem um ein geradzahliges Vielfaches der Symboldauer $T_S$ verschobenen Zeitpunkt angenommen werden, so ergibt sich ein sogenannt gerades Phasendiagramm, welches neue, unerwartete Eigenschaften besitzt.

Fig. 1B zeigt das zu Fig. 1A gehörende, gerade Phasendiagramm. Weder treten hier alle möglichen Phasenpunkte auf, noch haben die verbleibenden die im zeitinvarianten Phasendiagramm angegebenen Häufigkeiten. Vielmehr lassen sich zwei Schwerpunkte ausmachen, nämlich bei $\Phi = 0$ und bei $\Phi = \pi$.

Fig. 1C zeigt ein zu Fig. 1B komplementäres, sogenannt ungerades Phasendiagramm, welches aufgrund der Phasenwerte zustande kommt, welche in bezug auf denselben Referenzzeitpunkt $t_R$ zu einem um ein ungeradzahliges Vielfaches der Symboldauer $T_S$ verschobenen Zeitpunkt angenommen werden. Man beachte, dass das ungerade Phasendiagramm aus dem geraden durch eine konstante Phasendrehung, welche in diesem Beispiel $\pi/2$ beträgt, hervorgeht.

Wie diese Tatsache zugunsten eines Synchronisationsverfahrens ausgenützt werden kann, soll nachfolgend beschrieben werden.

Grundsätzlich hat ein Synchronisationsverfahren die Aufgabe, diejenigen Zeitpunkte zu bestimmen, bei welchen die Phasenwerte des Frequenzbasisbandsignals mit einem der im zeitinvarianten Phasendiagramm auftretenden Phasenpunkte zusammenfällt. Da das Frequenzbasisbandsignal bei der Uebertragung vom Sender zum Signalempfänger verrauscht wird, muss auf statistische Auswerteverfahren zurückgegriffen werden. Um solche Auswerteverfahren zu vereinfachen und damit zu beschleunigen, wird das Frequenzbasisbandsignal vorverarbeitet, so dass das entsprechende, zeitinvariante Phasendiagramm nur noch einen Bruchteil der Phasenpunkte des ursprünglichen Phasendiagramms besitzt.

Anhand der Figur 1B lässt sich zeigen, wie das Frequenzbasisbandsignal erfindungsgemäss vorverarbeitet wird. In dieser Figur sieht man, dass dieses gerade Phasendiagramm zwei sogenannte Grundphasenpunkte, nämlich bei $\Phi = 0$ und $\Phi = \pi$ hat, um welche sich je zwei sogenannte Störphasenpunkte, nämlich bei $\Phi = -\pi/4$ und bei $\Phi = +\pi/4$ resp. $\Phi = 3\pi/4$ und bei $\Phi = 5\pi/4$ scharen. Die Grundphasenpunkte werden nun mit einem geeigneten Abbildungsverfahren, z.B. durch Potenzierung des Frequenzbasisbandsignals mit einem Exponenten der Grösse 2, auf einen sogenannt reduzierten Phasenpunkt, in diesem speziellen Fall $\Phi = 0$, abgebildet. Bei diesem Abbildungsverfahren bewegen sich die Störphasenpunkte in die Nähe dieses neuen, reduzierten Phasenpunkts. Die Streuung der Störphasenpunkte bezüglich des reduzierten Phasenpunktes in einem solchen reduzierten Phasendiagramm ist ein wichtiger Parameter eines erfindungsgemässen Synchronisationsverfahrens.

Fig. 2 veranschaulicht die Wirkung der vorverarbeitenden Abbildung, bei welcher z.B. ein gerades Phasendiagramm in ein reduziertes Phasendiagramm übergeführt wird. Das gerade Phasendiagramm habe eine Anzahl $p$ von Grundphasenpunkten (z.B. $p = 4$). Zu jedem der Grundphasenpunkte kann ein Phasenbereich (schraffiert eingezeichnet) angegeben werden, in welchem die zum jeweiligen Grundphasenpunkt gehörenden Störphasenpunkte liegen. Das Abbildungsverfahren bildet nun diese $p$ Phasenbereiche (Fig. 2 linke Seite) auf einem einzigen, reduzierten Phasenbereich (Fig. 2, rechte Seite) ab.

Man beachte, dass das ungerade Phasendiagramm mit demselben Abbildungsverfahren ebenfalls reduziert werden kann. Allerdings sind die beiden reduzierten Phasendiagramme nicht identisch, können aber mit einfachen Mitteln zur Deckung gebracht werden.

Der gesuchte, optimale Zeitpunkt $T_K$ hat die Eigenschaft, dass die Streuung der Phasenwerte des Frequenzbasisbandsignals bezüglich des Grundphasenpunktes des reduzierten Phasendiagramms minimal ist im Vergleich zu einer entsprechenden Streuung zu irgendeinem anderen Zeitpunkt.

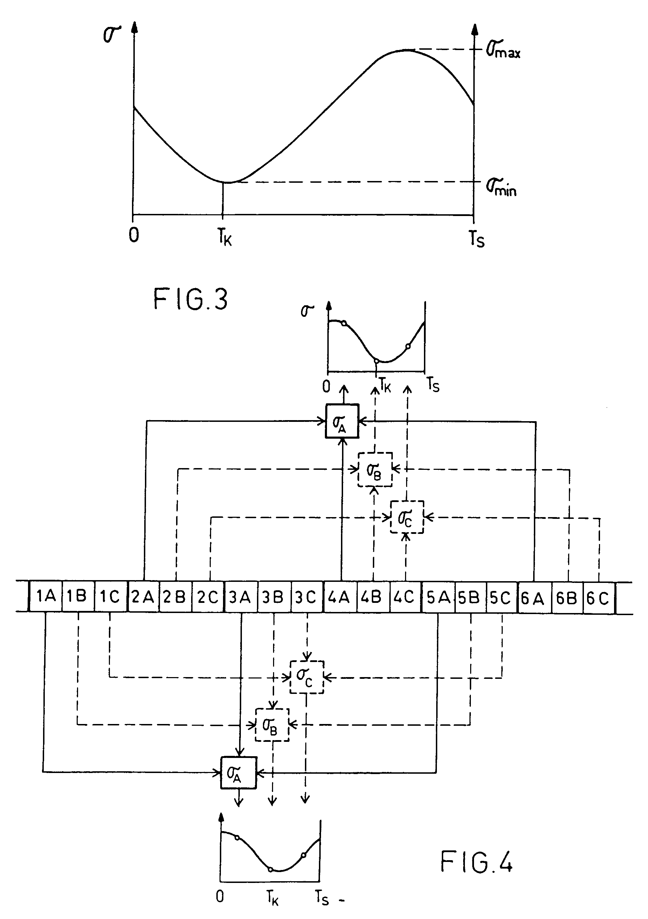

Fig. 3 stellt die Streuung der Phasenwerte als Funktion der Zeit in einem Intervall der Länge $T_S$ dar. Die Streuung bewegt sich zwischen einer grössten Streuung $\sigma_{max}$ und einer kleinsten Streuung $\sigma_{min}$. Je grösser die Differenz der beiden Werte ist, was als Entscheidungsspielraum bezeichnet wird, desto störfester arbeitet das Synchronisationsverfahren.

Fig. 4 zeigt eine schematische Darstellung einer bevorzugten Ausführungsform des erfindungsgemässen Synchronisationsverfahrens. Ein Frequenzbasisbandsignal sei in 6 aufeinanderfolgenden Zeitfenstern (gekennzeichnet durch die Zahlen 1 bis 6) der Länge $T_S$ in jeweils drei gleichen Subintervallen (gekennzeichnet durch die Buchstaben A, B, C) abgetastet worden. Diese 18 abgetasteten Werte werden in zwei Gruppen aufgeteilt, wobei die erste aus den 9 Werten 1A, 1B, 1C, 3A, 3B, 3C, 5A, 5B, 5C, und die zweite aus den 9 Werten 2A, 2B, 2C, 4A, 4B, 4C, 6A, 6B, 6C besteht. Für beide Gruppen werden je 3, den Subintervallen A, B, C entsprechende Streuungen $\sigma_A$, $\sigma_B$, $\sigma_C$ berechnet. Das Subintervall mit der kleinsten Streuung, in diesem Fall das Subintervall B, bestimmt den optimalen Zeitpunkt $T_K$. Der Abtastzeitpunkt $T_A$ ist abhängig von den im Sender realisierten CPM-Verfahren und ist entweder gleich $T_K$ oder $T_K + T_S/2$.

Grundsätzlich genügt es, eine der beiden Gruppen von abgetasteten Phasenwerten zu verarbeiten. Benutzt man die Werte beider Gruppen, so verbessert sich bei gleich langer Beobachtungsdauer die Statistik. Es ist auch nicht nötig, dass beide Gruppen gleich viele Zeitfenster aufweisen. Wesentlich ist lediglich, dass die Streuwerte entsprechender Subintervalle korrekt gewichtet kombiniert werden.

Das eben beschriebene Verfahren lässt sich ohne Einschränkung auf eine frei wählbare Zahl N von Zeitfenstern mit einer frei wählbaren Unterteilung in Subintervalle verallgemeinern.

Nachfolgend wird anhand eines konkreten Blockschaltbildes eine bevorzugte Ausführungsform der Erfindung beschrieben.

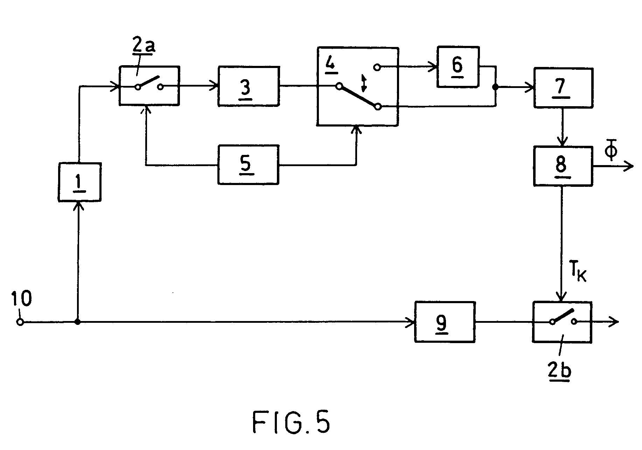

Fig. 5 zeigt ein Blockschaltbild einer Synchronisationsschaltung eines Signalempfängers nach dem Prinzip der Erfindung. Das Signal, bezüglich dessen der Empfänger synchronisiert werden soll, ist ein Frequenzbasisbandsignal 10, wie es nach der Demodulation einer Trägerschwingung vorliegt. Dieses wird einem Potenzierer 1 zugeführt und von einer Abtastvorrichtung 2a getastet. Ein Wechselschalter 4 teilt die abgetasteten Werte auf zwei Kanäle auf. Der eine Kanal wird von einem Phasenschieber 6 zwischenverarbeitet und dann einer Speichereinheit 7 zugeführt, der andere Kanal wird unmittelbar der Speichereinheit 7 zugeführt. Eine Rechenschaltung 8 bestimmt den optimalen Zeitpunkt $t_K$, welcher einer Abtastvorrichtung 2b übermittelt wird. Diese Abtastvorrichtung 2b tastet das von einem Verzögerungsglied 9 verzögerte Frequenzbasisbandsignal zu einem für das nachfolgende Signalverarbeitungsverfahren des Empfängers optimalen Absatzzeitpunkt $T_A$ ab.

Die Abtastvorrichtung 2a und der Wechselschalter 4 werden von einem Taktgenerator 5 gesteuert. Dieser unterteilt ein Zeitfenster von der Länge einer Symboldauer $T_S$ in eine Anzahl K von Subintervallen und wiederholt diesen Vorgang periodisch im zeitlichen Abstand $T_S$.

Die Abtastvorrichtung 2a tastet das vom Potenzierer 1 kommende Signal in jedem der K Subintervalle eines Zeitfensters. Der Wechselschalter 4 schaltet mit einer Periode der Länge $T_S$ zwischen den beiden Kanälen hin und her, so dass jeweils alle im selben Zeitfenster getasteten Werte des Signals auf denselben Kanal gehen. Der Phasenschieber 6 schiebt die an seinem Eingang anliegenden Phasenwerte um einen konstanten, auf das im Sender realisierte CPM-Verfahren abgestimmten Wert. Die Benutzung eines Phasenschiebers 6 entspricht einer bevorzugten Ausführungsform der Erfindung, welche zu einer Vereinfachung der in der nachfolgenden Rechenschaltung 8 implementierten Datenaufbereitung führt.

In der Speichereinheit 7 werden die abgetasteten Werte einer gegebenen Zahl N von Zeitfenster abgelegt. Der Inhalt der Speichereinheit 7 wird periodisch nachgeführt, d.h. nicht mehr benötigte Werte werden ausgespeichert und neue Werte werden eingespeichert.

Die Rechenschaltung 8 ermittelt aus den N x K abgelegten Werten den optimalen Zeitpunkt $T_k$. Um die Varianzen bestimmen zu können, müssen zuerst Mitterlwerte berechnet werden, da sich die Phase des Signals zeitlich ändert, sei es durch die Uebertragung des Signals zum Empfänger oder sei es z.B. wegen nicht identischer Trägerfrequenzposzillatoren im Sender und im Empfänger. Ist dann der optimale Zeitpunkt $T_K$ ermittelt, so kann der entsprechende Mittelwert als Phasenmittelwert $\overline{\Phi}$ z.B. an einen Phasendekoder (in Fig. 5 nicht eingezeichnet) weitergegeben werden. Man beachte, dass sich der Phasenmittelwert ohne zusätzlichen Aufwand gleichzeitig mit dem optimalen Abtastzeitpunkt $T_K$ bestimmen lässt. Dies ist ein weiterer Vorteil eines Signalübertragungsverfahrens mit einem erfindungsgemässen Synchronisationsverfahren.

Durch die Verwendung des Phasenschiebers 6 ist es nicht mehr nötig, zur Berechnung der Streuung die zu verschiedenen Gruppen gehörenden Phasenwerte mit unterschiedlichen Algorithmen zu verarbeiten. Zu jedem der K Subintervalle kann nun die Streuung der entsprechenden, in der Speichereinheit 7 abgelegten Phasenwerte berechnet und das Minimum der Streuung bestimmt werden.

Das Verzögerungsglied 9 ist allein dazu da, die zur Ermittlung des optimalen Zeitpunktes $T_K$ benötigte Zeit in der gewünschten Weise abzugleichen. Beobachtet das Synchronisationsverfahren das Frequenzbasisbandsignal z.B. während eines Zeitintervalls der Länge N x $T_S$, so empfiehlt es sich, durch das Verzögerungsglied 9 eine Zeitverschiebung von z.B. N x $T_S/2$ einzuführen.

Ein zweites Ausführungsbeispiel betrifft ein Signalübertragungsverfahren, welches gemäss einer bevorzugten Ausführungsform der Erfindung im Sender einen Frequenzpuls verwendet, der die Synchronisation des Signalempfängers besonders störfest macht.

Die Störfestigkeit eines erfindungsgemässen Synchronisationsverfahrens lässt sich durch einen Entscheidungsspielraum charakterisieren. In der Darstellung der Fig. 3 entspricht der Entscheidungsspielraum der Differenz zwischen $\sigma_{max}$ und $\sigma_{min}$. Die durch den Kanal eingeführte Störung hebt nämlich die Streuung $\sigma_{min}$ an und mit zunehmender Grösse dieser Störung wird es schwieriger den optimalen Zeitpunkt $T_K$ zu bestimmen.

Da $\sigma_{min}$ gegeben ist durch die Streuung der Störphasenpunkte bezüglich der Grundphasenpunkte, ergeben sich Wege, die Synchronisation störfest zu machen, indem im Sender ein Frequenzpuls g(t) so festgelegt wird, dass der Entscheidungsspielraum maximal wird.

Mathematisch gesprochen geht es darum, ein vom Frequenzpuls abhängiges Funktional, welches die Streuung der Störphasenpunkte im Phasendiagramm angibt, zu minimieren. Die Lösung dieser Aufgabe kann beispielsweise mittels der Variationsrechnung gefunden werden und ergibt den gesuchten Frequenzpuls. Durch Einführen geeigneter Nebenbedingungen kann der Frequenzpuls mit weiteren, für das Signalübertragungsverfahren günstigen Eigenschaften versehen werden. In der Folge werden einige bevorzugte Nebenbedingungen angegeben.

Generell ist es wünschenswert ein Signalübertragungsverfahren zu erhalten, welches ein effizientes Leistungsdichtespektrum aufweist. Aus diesem Grund wird bevorzugt ein Frequenzpuls gesucht, welcher ein Leistungsdichtespektrum G(f) hat, das zusammen mit seiner Ableitung bei einer Frequenz f = $1/2T_S$ betragsmässig verschwindet.

Eine weitere, bevorzugte Forderung an den Frequenzpuls ist, dass er bezüglich seiner Mitte spiegelsymmetrisch verläuft. Daraus ergeben sich für das Signalübertragungsverfahren z.B. verbeserte Distanzeigenschaften, d.h. geringere Fehlerwahrscheinlichkeiten bei der Signalauswertung im Signalempfänger.

Nachfolgend sollen die Eigenschaften eines auf die oben beschriebene Weise gefundenen, optimal genannten Frequenzpulses mit demjenigen eines gebräuchlichen Frequenzpulses verglichen werden. Beide Frequenzpulse haben eine Länge L = 5, d.h. sie erstrecken sich über einen Zeitraum, welcher dem Fünffachen der Symboldauer $T_S$ entspricht.

Fig. 6 zeigt den zum Vergleich herangezogenen, gebräuchlichen Frequenzpuls 11. Sein Spektrum ist ein überhöhter Kosinus. Ein solcher Frequenzpuls wird allgemein als 5SRC-Puls (Spectral Raised Cosine, Länge L = 5) bezeichnet.

Fig. 7 zeigt einen möglichen, optimalen Frequenzpuls 12 der Länge L = 5 wie er aufgrund der folgenden Nebenbedingungen entsteht:

    1. Symmetrie des Frequenzpulses

    2. Verschwinden des Spektrums G(f) des Frequenzpulses bei Frequenzen f = $1/2T_S$

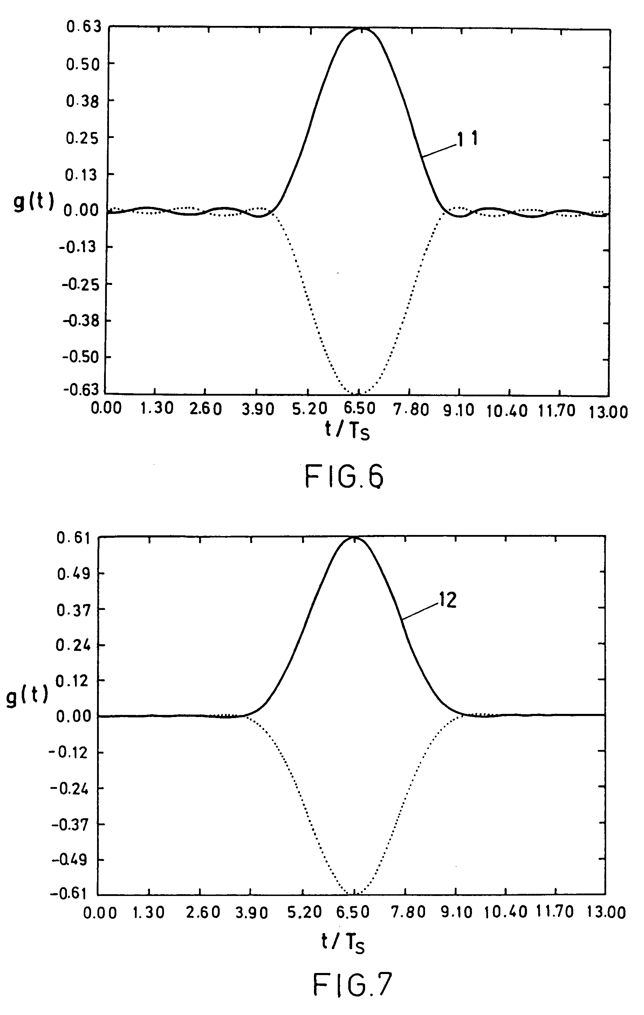

Sowohl in Fig. 6 als auch in Fig. 7 ist auf der Abszisse eine relative Zeit $t/T_S$ aufgetragen und auf der Ordinate der Wert des Frequenzpulses g(t) als reine Zahl.

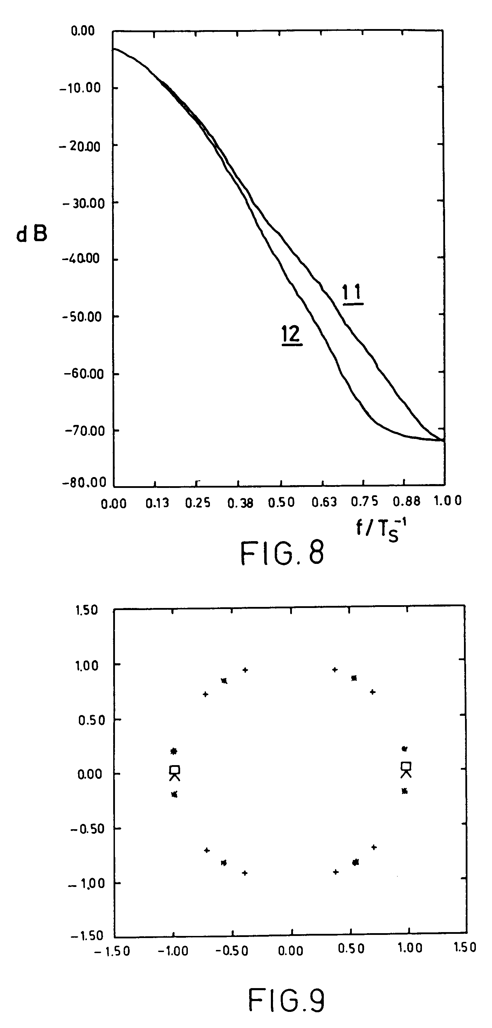

Fig. 8 stellt die relative Ausserbandleistung der beiden Frequenzpulse aus Fig. 6 und Fig. 7 dar. Sie gibt an, welcher Bruchteil der Signalleistung ausserhalb einer bestimmten Bandbreite liegt. Auf der Abszisse ist eine relative Frequenz $f/T_S^{-1}$ aufgetragen, auf der Ordinate die relative Ausserbandleistung in dB. Es ist klar zu erkennen, dass der optimale Frequenzpuls 12 verglichen mit dem 5SRC-Puls 11 ein spektral

EP 0 298 224 B1

effizienteres Leistungsdichtespektrum hat, d.h. dass die Ausserbandleistung mit steigender relativer Frequenz stärker und schneller abfällt.

Die Störempfindlichkeit des Synchronisationsverfahrens kann, wie bereits erwähnt, durch die Grösse des Entscheidungsspielraumes abgeschätzt werden, d.h. durch die Differenz zwischen maximaler Streuung $\sigma_{max}$ und minimaler Streuung $\sigma_{min}$. Wird ein Signalübertragungsverfahren mit binären Symbolen, einem Modulationsindex h = 1/2 und einem Synchronisationsverfahren wie im ersten Ausführungsbeispiel beschrieben, wobei der Exponent p = 2 ist, vorausgesetzt, so erhält man folgende Werte:

| | 5SRC-Puls | optimaler Frequenzpuls |
|---|---|---|
| $\sigma_{max}$ | 0.7684 | 0.7952 |
| $\sigma_{min}$ | 0.4708 | 0.5012 |
| Entscheidungsspielraum | 0.2976 | 0.2940 |

Der Entscheidungsspielraum ist in beiden Fällen etwa gleich gross. (Dass $\sigma_{min}$ beim optimalen Frequenzpuls 12 grösser ist, rührt daher, dass der 5SRC-Puls einige Nebenbedingungen nicht erfüllt.) Der optimale Frequenzpuls 12 hat folglich bei gleichem Entscheidungsspielraum eine kleinere Ausserbandleistung und ist deshalb eindeutig zu bevorzugen.

Fig. 9 zeigt das gerade Phasendiagramm eines Frequenzbasisbandsignals, wenn die auftretenden Symbole binär, der Modulationsindex h = 1/2 und der Frequenzpuls von der in der Fig. 7 gezeigten Form ist. Für die Auftrittshäufigkeit sind folgende Symbole verwendet worden:

| Zeichen im Phasendiagramm | Auftrittshäufigkeit in Ereignissen |
|---|---|
| + | 1 |
| * | 2 |
| ■ | 4 |

Aus diesem Phasendiagramm geht hervor, dass, vorausgesetzt die Synchronisation des Signalempfängers wird wie im ersten Ausführungsbeispiel beschrieben vorgenommen, im Potenzierer 1 ein Exponent der Grösse P = 2 genügt. Man beachte, dass solch niedere Exponenten eine besonders günstige Folge der Erfindung darstellen, da das durch den Kanal verursachte Rauschen im Verhältnis zum eigentlichen Signal nur wenig angehoben wird.

Abschliessend kann gesagt werden, dass durch das Einführen geeigneter Nebenbedingungen bei der Bestimmung des Frequenzpulses ein Signalübertragungsverfahren mit den jeweils gewünschten Eigenschaften geschaffen werden kann. Ein erfindungsgemässer Frequenzpuls hat bei gegebenen Nebenbedingungen die geringste Streuung der Störphasenpunkte. Mit der Erfindung liegt somit ein Signalübertragungsverfahren vor, welches sowohl eine grosse, spektrale Effizienz, als auch eine störfeste Synchronisation des Signalempfängers gewährleistet.

**Patentansprüche**

1. Signalübertragungsverfahren, bei welchem

a) in einem Sender eine Folge von gleichverteilten, statistisch unkorrelierten Symbolen, welche eine Symboldauer $T_S$ besitzen, mit einem gegebenen CPM-Verfahren in ein Frequenzbasisbandsignal umgewandelt werden,

b) das Frequenzbasisbandsignal mittels einer Trägerschwingung zu einem Signalempfänger übertragen wird,

c) der Signalempfänger bezüglich des Frequenzbasisbandsignals auf die Weise synchronisiert wird,

d) dass in einer Anzahl N von Zeitfenstern, deren Anfangszeitpunkte bezogen auf einen gegebenen Referenzzeitpunkt $t_R$ um ein ganzzahliges Vielfaches der Symboldauer $T_S$ verschoben sind und deren Länge jeweils der Symboldauer $T_S$ entspricht, das Frequenzbasisbandsignal in einer Anzahl K von Subintervallen pro Zeitfenster abgetastet wird,

e) für abgetastete Werte aus einander entsprechenden Subintervallen Streuungen berechnet werden und

6

f) aus der zeitlichen Lage der kleinsten der Streuungen ein Abtastzeitpunkt $T_A$ abgeleitet wird, dadurch gekennzeichnet, dass

g) die N Zeitfenster in zwei Gruppen aufgeteilt werden, wobei die eine Gruppe aus allen Zeitfenstern besteht, deren Anfangszeitpunkte um ein geradzahliges Vielfaches der Symboldauer $T_S$ verschoben sind bezogen auf den Referenzzeitpunkt $t_R$ und die andere Gruppe aus den um ein ungeradzahliges Vielfaches der Symboldauer $T_S$ verschobenen Zeitfenstern und dass

h) die Streuungen für jede Gruppe für sich ermittelt werden.

2. Verfahren nach Anspruch 1, dadurch gekennzeichnet, dass die zur selben Gruppe gehörenden, abgetasteten Werte, die sich zu bestimmten, mit der Symboldauer $T_S$ periodischen Zeitpunkten in einer Anzahl p von Phasenbereichen aufhalten, wobei jeder der p Phasenbereiche einen Grundphasenpunkt und mehrere Störphasenpunkte enthält, mit einem Abbildungsverfahren verarbeitet werden, welches die p Phasenbereiche auf einen reduzierten Phasenbereich und die p Grundphasenpunkte auf einen reduzierten Phasenpunkt abbildet.

3. Verfahren nach Anspruch 2, dadurch gekennzeichnet, dass das Abbildungsverfahren eine Potenzierung mit einem Exponent der Grösse p ist.

4. Verfahren nach Anspruch 3, dadurch gekennzeichnet, dass für mindestens eine Gruppe zur Bestimmung der Streuungen nach der Verarbeitung durch das Abbildungsverfahren

a) die Phasenwerte bestimmt werden,

b) für jedes Subintervall die Differenzen der einzelnen Phasenwerte zum reduzierten Phasenpunkt quadriert und summiert werden.

5. Verfahren nach Anspruch 4, dadurch gekennzeichnet, dass die

a) Streuungen für beide Gruppen ermittelt werden,

b) zum selben Subintervall gehörende Streuungen entsprechend ihrem statistischen Gewicht kombiniert werden und

c) die kombinierten Streuungen zur Bestimmung des Abtastzeitpunktes $T_A$ herangezogen werden.

6. Verfahren nach Anspruch 5, dadurch gekennzeichnet, dass die Phasenwerte der einen Gruppe nach dem Abbildungsverfahren um einen konstanten Wert verschoben werden, so dass die reduzierten Grundphasenpunkte der beiden Gruppen zusammenfallen.

7. Verfahren nach einem der Ansprüche 1 bis 6, dadurch gekennzeichnet, dass das CPM-Verfahren einen Frequenzpuls verwendet, der die Streuung der Störphasenpunkte bezüglich der Grundphasenpunkte dadurch minimiert, dass er

a) eine Länge hat, die grösser als die Symboldauer $T_S$ ist,

b) symmetrisch ist

c) und ein Leistungsdichtespektrum G(f) besitzt, welches in dem Sinn effizient ist, dass es selber und seine Ableitung bei einer Frequenz der Grösse $1/2T_S$ betragsmässig verschwinden.

8. Synchronisationsschaltung zur Verwendung in einem Empfänger zur Durchführung des Verfahrens nach Anspruch 1, umfassend eine Abtastvorrichtung (2a) zum Abtasten des Frequerzbasisbandsignals in jedem von K Subintervallen einer gegebenen Anzahl N von Zeitfenstern, deren Anfangszeitpunkte bezogen auf einen gegebenen Referenzzeitpunkt $t_R$ um ein ganzzahliges Vielfaches der Symboldauer ($T_S$) verschoben sind und deren Länge jeweils der Symboldauer $T_S$ entspricht, und eine Rechenschaltung (8), um für abgetastete Werte aus einander entsprechenden Subintervallen Streuungen zu berechnen und aus der Zeitlichen Lage der kleinsten der Streuungen einen Abtastzeitpunkt $T_A$ abzuleiten, dadurch gekennzeichnet, dass ein Mittel (4) zum Aufteilen der N Zeitfenster in je zwei Gruppen vorgesehen ist, wobei die eine Gruppe aus allen Zeitfenstern besteht, deren Anfangszeitpunkte um ein geradzahliges Vielfaches der Symboldauer $T_S$ verschoben ist bezogen auf den Referenzzeitpunkt $t_R$ und die andere Gruppe aus den um ein ungeradzahliges Vielfaches der Symboldauer $T_S$ verschobenen Zeitfenstern und dass die Rechenschaltung (8) so ausgebildet ist, dass die Streuungen für jede Gruppe für sich ermittelt werden.

9. Empfänger zur Verwendung in einem Signalübertragungsverfahren gemäss Anspruch 1, gekennzeichnet durch eine Synchronisationsschaltung gemäss Anspruch 8.

**10.** Einrichtung zur Durchführung des Signalübertragungsverfahrens gemäss Anspruch 1 mit einem Sender und einem Empfänger, dadurch gekennzeichnet, dass der Empfänger eine Synchronisationsschaltung gemäss Anspruch 8 aufweist und dass der Sender Mittel zur Erzeugung eines Frequenzpulses umfasst, der eine Länge hat, die grösser als die Symboldauer $T_S$ ist, der symmetrisch ist und der ein Leistungsdichtespektrum G(f) besitzt, welches in dem Sinne effizient ist, dass es selber und seine Ableitung bei einer Frequenz der Grösse $1/2T_S$ betragsmässig verschwinden, so dass die Streuung der Störphasenpunkte bezüglich der Grundphasenpunkte im Empänger minimal ist.

**Claims**

**1.** Method of signal transmission, wherein

a) in a transmitter a sequence of equally distributed, statistically uncorrelated symbols of a symbol duration $T_S$ are converted by means of a given CPF process into a frequency basis band signal,

b) the frequency basis band signal is transmitted by means of a carrier oscillation to a signal receiver,

c) the signal receiver is synchronized with respect to the frequency basis band signal in such a manner that

d) the frequency basis band signal is scanned in a number K of sub-intervals per time window in a number N of time windows, the starting times of which, relative to a specified reference time $t_R$, are transposed by an integer multiple of symbol duration $T_S$ and the length of which corresponds with the respective symbol duration $T_S$,

e) dispersions for scanned values are calculated from corresponding sub-intervals, and

f) a scanning period $T_A$ is derived from a point in time of the smallest of the dispersions,

**characterised in that**

g) the N time windows are divided into two groups, of which the one group consists of all time windows the initial points in time of which are transposed by an even multiple of symbol duration $T_S$ relative to reference point in time $t_R$, and the other group consists of those time windows which have been moved by an uneven multiple of symbol duration $T_S$, and that

h) dispersions are determined individually for each group.

**2.** Method according to claim 1, **characterised in that** scanned valued belonging to the same group and which are in specified points in time, which are periodical with symbol duration $T_S$, present in a number p of phase fields, wherein each of the p phase fields includes a ground-phase point and a plurality of interference-phase points, and is processed in an imaging process which images p phase fields on a reduced phase field and p ground-phase points on a reduced phase point.

**3.** Method according to claim 2, **characterised in that** the imaging process is an exponentiation with an exponent of value p.

**4.** Method according to claim 3, **characterised in that** to determine dispersions after processing by means of the imaging process, for at least one group

a) the phase values are determined,

b) for each sub-interval the differences of individual phase values relative to the reduced phase point are squared and summed.

**5.** Method according to claim 4, **characterised in that** the

a) dispersions for both groups are determined,

b) dispersions belonging to the same sub-interval are combined relative to their statistical weight, and

c) the combined dispersions are used for determining the scanning time $T_A$.

**6.** Method according to claim 5, **characterised in that** the phase values of the one group according to the imaging method are transposed by a constant value, so that the reduced around phase points of both groups coincide.

**7.** Method according to one of claims 1 to 6, **characterised in that** the CPM method uses a frequency pulse which minimizes dispersion of distortion-phase points relative to ground-phase points in that

a) its length is longer than symbol duration $T_S$,

b) symmetrical, and

c) has an output density spectrum G(f), which is efficient in that it and its derivative disappear at a frequency of size $1/2T_S$.

**8.** Synchronizing circuit for use in a receiver for carrying out the method according to claim 1, comprising a scanning device (2a) for scanning the frequency basis band signal in each of K sub-intervals of a specified number N of time windows, the initial points in time of which relative to a specified reference point in time $t_R$ are transposed by an integer multiple of symbol duration ($T_S$), and the length of which corresponds with a respective symbol duration $T_S$, and a computer circuit (8) for calculating dispersions from corresponding sub-intervals for scanned valves, and for deriving from a position in time of the smallest dispersions a scanning point in time $T_A$, **characterised in that** a means (4) is provided for dividing the N time windows into two respective groups, wherein the one group consists of all time windows the initial point in time of which are transposed by an even multiple of symbol duration $T_S$ relative to the reference point in time $t_R$, and the other group consists of those time windows transposed by an uneven multiple of symbol duration $T_S$, and that the computer circuit (8) is arranged so that dispersions can be determined individually for each group.

**9.** Receiver for use in a signal-transmission method according to claim 1, **characterised by** a synchronization circuit according to claim 8.

**10.** Device for carrying out the signal-transmission method according to claim 1 by means of a transmitter and a receiver, **characterised in that** the transmitter comprises a synchronization circuit according to claim 8, and that the transmitter includes means for producing a frequency pulse of a length in excess of the symbol duration $T_S$, which is symmetrical and has an output-density spectrum G(f) which is efficient in that it and its derivative disappear at a frequency of size $1/2T_S$, so that the dispersion of the distortion -phase points relative to the ground-phase points in the receiver are minimal.

**Revendications**

**1.** Procédé pour la transmission des signaux dans lequel

a) dans un émetteur, on transforme une série de symboles répartis uniformément, non corrélés statistiquement, qui possèdent une durée de symbole $T_S$, avec un procédé CPM donné en un signal de bande de fréquence de base,

b) on transmet le signal de bande de fréquence de base au moyen d'une oscillation porteuse à un récepteur de signaux,

c) on synchronise le récepteur de signaux par rapport au signal de bande de fréquence de base de façon que

d) dans un nombre N de fenêtres de temps dont les moments de départ rapportés à un moment de référence donné $t_R$ sont décalés d'un multiple à nombre entier de la durée de symbole $T_S$ et dont la longueur correspond chaque fois à la durée de symbole $T_S$, on balaie le signal de bande de fréquence de base dans un nombre K de sous-intervalles par fenêtre de temps,

e) pour les valeurs balayées à partir des sous-intervalles correspondant les uns aux autres on calcule les dispersions et

f) à partir de la position dans le temps de la plus petite des dispersions, on dérive un moment de balayage $T_A$,

caractérisé en ce que

g) les N fenêtres de temps sont réparties en deux groupes, un groupe étant constitué de toutes les fenêtres de temps, dont les moments de départ sont décalés d'un multiple pair de la durée de symbole $T_S$ rapportée au moment de référence $t_R$ et l'autre groupe à partir des fenêtres de temps est décalé d'un multiple impair de la durée de symbole $T_S$ et en ce que

h) les dispersions sont calculées pour chaque groupe.

**2.** Procédé selon la revendication 1, caractérisé en ce que les valeurs balayées appartenant au même groupe et lesquelles se situent à des moments déterminés périodiques de la durée de symbole $T_S$ en un nombre p de zones de phase, chacune des zones de phase p contenant une période de phase fondamentale et plusieurs périodes de phase parasites, sont traitées à l'aide d'un procédé de représentation qui représente les zones de phase p sur une zone de phase réduite et les périodes de phase fondamentales p sur une période de phase réduite.

**3.** Procédé selon la revendication 2, caractérisé en ce que le procédé de représentation est une potentialisation avec un exposant d'ordre p.

**4.** Procédé selon la revendication 3, caractérisé en ce que pour au moins un groupe destiné à la détermination des dispersions selon le traitement par le procédé de représentation
   a) on détermine les valeurs de phase,
   b) pour chaque sous-intervalle on élève au carré et on fait la somme des différences des valeurs de phase individuelles en une période de phase réduite.

**5.** Procédé selon la revendication 4, caractérisé en ce que
   a) les dispersions sont calculées pour les deux groupes,
   b) on combine les dispersions appartenant au même sous-intervalle en fonction de leur poids statistique,
   d) on fait appel aux dispersions combinées pour la détermination du moment de balayage $T_A$.

**6.** Procédé selon la revendication 5, caractérisé en ce que les valeurs de phase d'un groupe selon le procédé de représentation sont décalées d'une valeur constante de sorte que les périodes de phase fondamentales réduites des deux groupes coïncident.

**7.** Procédé selon l'une des revendications 1 à 6, caractérisé en ce que le procédé CPM utilise une impulsion de fréquence qui minimise la dispersion des périodes de phase parasites par rapport aux périodes de phase fondamentales, en ce que
   a) l'impulsion de fréquence a une longueur supérieure à la durée de symbole $T_S$,
   b) en ce qu'elle est symétrique,
   c) et en ce qu'elle possède un spectre de puissance volumique G(f) qui est efficace en ce sens que lui-même et sa dérivée disparaîssent proportionnellement lors d'une fréquence de la grandeur $1/2T_S$.

**8.** Circuit de synchronisation destiné à l'utilisation dans un émetteur pour la réalisation du procédé selon la revendication 1, englobant un dispositif de balayage (2a) destiné à balayer le signal de bande de fréquence de base dans chacun des sous-intervalles K d'un nombre donné N de fenêtres de temps, dont les moments de départ rapportés à un moment de référence donné $t_R$ sont décalés d'un multiple pair de la durée de symbole ($T_S$) et dont la longueur correspond chaque fois à la durée de symbole $T_S$, et un circuit de calcul (8) servant à calculer pour les valeurs balayées les dispersions à partir des sous-intervalles correspondants et pour dériver à partir de la position dans le temps de la plus petite des dispersions un moment de balayage $T_A$, caractérisé en ce qu'il est prévu un moyen (4) pour répartir les fenêtres de temps N dans chacun des deux groupes', un groupe étant constitué de toutes les fenêtres de temps dont les moments de départ sont décalés d'un multiple pair de la durée de symbole $T_S$ rapportés au moment de référence $t_R$ et l'autre groupe à partir des fenêtres de temps décalé d'un multiple impair de la durée de symbole $T_S$ et en ce que le circuit de calcul (8) est apte à déterminer les dispersions pour chaque groupe.

**9.** Récepteur destiné à l'utilisation dans un procédé de transmission de signaux selon la revendication 1, caractérisé par un circuit de synchronisation selon la revendication 8.

**10.** Dispositif pour la réalisation du procédé de transmission de signaux selon la revendication 1, avec un émetteur et un récepteur, caractérisé en ce que le récepteur présente un circuit de synchronisation selon la revendication 8 et en ce que l'émetteur comporte des moyens pour la production d'une impulsion de fréquence qui a une longueur supérieure à la durée de symbole $T_S$, qui est symétrique et qui possède un spectre de puissance volumique G(f) qui est efficace en ce sens qu'il disparaît lui-même ainsi que sa dérivée proportionnellement lors d'une fréquence de l'ordre $1/2T_S$ de sorte que la dispersion de la période de phase parasite est minime par rapport aux périodes de phase fondamentales dans le récepteur.

FIG.1A

FIG.1B

FIG.1C

FIG.2

FIG.3

FIG.4

FIG.5

FIG.6

FIG.7

14

FIG.8

FIG.9